# EUROPEAN PATENT APPLICATION

(11) **EP 3 275 619 A1**
(43) Date of publication of application: **31.01.2018**
(21) Application number: 16382377.6
(22) Date of filing: 29.07.2016
(51) Int. Cl.: B29C 47/88, B29C 47/92, B29C 47/06, B29C 47/14, G01N 3/08

(54) **SYSTEMS AND METHODS FOR THE ONLINE MEASUREMENT OF MELT STRENGTH OF POLYMERIC MULTILAYER AND MONOLAYER STRUCTURES**

(71) Applicant: Dow Global Technologies LLC, Midland, MI 48674 (US)
(72) Inventor: NIETO, Jesús, 43006 Tarragona (ES); PARKINSON, Shaun, 43006 Tarragona (ES); MUÑOZ, David, 43006 Tarragona (ES)
(74) Representative: Elzaburu S.L.P.

(57) **Abstract**

The present disclosure includes a method for determining a melt strength includes extruding one or more polymers to form the polymer film (104), passing the polymer film (104) at least partially around a measurement roll (130) coupled to a force measuring device (154), at least partially around a chill roll ((132) downstream of the measurement roll (130), and through a nip (160) defined between two nip rolls (134, 136), and measuring a force exerted on the measurement roll (130) by the polymer film (104) using the force measuring device (154). The polymer film( 104) is at least partially molten when contacting the measurement roll (130). A system includes an extruder (102), a measurement roll (130) couple to one or more load cells, a chill roll (132)coupled to a drive motor (157), at least two nip rolls (134, 136) downstream of the chill roll (132), and a take-up roll (166) downstream of the nip rolls (134, 136). The load cells measure a force exerted by the molten polymer film on the measurement roll (130).

## Description

### TECHNICAL FIELD

Embodiments of the present disclosure generally relate to measuring properties of polymeric structures, and more specifically to on-line melt tension devices, systems, and methods for measuring the melt tensions of polymeric multilayer and monolayer structures.

### BACKGROUND

Today, the molten web stability in cast or blown polymeric film processing is broadly related to material properties such as melt strength, elongational viscosity, dynamic viscosity, melt elasticity, and the like. Such properties can be potentially used to model the real-life behavior of molten mono-material webs. Existing melt strength devices measure these properties on a strand generated from just one component, which can be either a pure polymer or a blended polymer. However, the properties of individual materials are often inadequate for predicting or modeling the behavior of multi-layer structures, such as films, that include two or more different materials, which is nowadays the most common situation in the plastics industry.

### SUMMARY

Accordingly, ongoing needs exist for improved devices, systems, and methods that can provide quantitative and reliable measurement of web stability and melt strength in multilayer structures under real monolayer or multilayer film making conditions. Embodiments of the present disclosure are directed to on-line melt tension systems and methods for measuring melt strength of polymeric multilayer and monolayer films.

According to one or more embodiments, a method for determining a melt strength of a polymer film is disclosed that may comprise extruding one or more polymers to form the polymer film; passing the polymer film at least partially around a measurement roll coupled to a force measuring device, at least partially around a chill roll downstream of the measurement roll, and through a nip defined between two nip rolls downstream of the chill roll, wherein the polymer film is a partially or fully molten polymer film when at least partially contacting the measurement roll; and measuring a force exerted on the measurement roll by the polymer film using the force measuring device.

According to another embodiment, a system for determining a melt strength of a polymer film may comprise an extruder having an extrusion die adapted to extrude one or more polymers to form a molten polymer film. The system may comprise a measurement roll positioned downstream of the extruder, the measurement roll having one or more load cells coupled thereto, wherein the one or more load cells measure a force exerted by the molten polymer film on the measurement roll. The system may further comprise a chill roll positioned downstream of the measurement roll, the chill roll operatively coupled to a drive mechanism, wherein the chill roll cools the molten polymer film to produce a polymer film; at least two nip rolls positioned downstream of the chill roll; and a take-up roll positioned downstream of the at least two nip rolls. The system may define a pathway in which the polymer film travels. The pathway may bring the polymer film into contact with the measurement roll, the chill roll, the at least two nip rolls, and the take-up roll.

Additional features and advantages of the described embodiments will be set forth in the detailed description which follows, and in part will be readily apparent to those skilled in the art from that description or recognized by practicing the described embodiments, including the detailed description which follows, the claims, as well as the appended drawings.

### BRIEF DESCRIPTION OF THE DRAWINGS

The following detailed description of specific embodiments of the present disclosure can be best understood when read in conjunction with the following drawings, where like structure is indicated with like reference numerals and in which:
FIG. 1 schematically depicts a system for measuring melt strength of a polymer film structure, in accordance with one or more embodiments of the present disclosure;
FIG. 2 schematically depicts another system for measuring melt strength of a polymer film structure, in accordance with one or more embodiments of the present disclosure;
FIG. 3 is a graph illustrating the measured melt tensions of two-layer polymer films comprising a layer of low density polyethylene (LDPE) and/or a layer of linear low density polyethylene (LLDPE) using the melt tension systems and methods in accordance with one or more embodiments of the present disclosure;
FIG. 4 is a graph illustrating the measured melt tensions of monolayer polymer films comprising blends of LDPE and LLDPE using the melt tension systems and methods in accordance with one or more embodiments of the present disclosure;
FIG. 5 is a graph illustrating the measured melt tensions of two-layer polymer films comprising a layer of LDPE and a layer of LLDPE using the melt tension systems and methods in accordance with one or more embodiments of the present disclosure; and
FIG. 6 is a graph illustrating the measured melt tensions of monolayer polymer films comprising blends of LDPE and LLDPE using the melt tension systems and methods in accordance with one or more embodiments of the present disclosure.

### DETAILED DESCRIPTION

Embodiments of the present disclosure are directed to systems and methods for reliably measuring the melt strength of and determining web stability for polymeric multilayer and monolayer structures. Specifically, the present embodiments are related to a melt tension system that may comprise an extruder having an extrusion die adapted to extrude a molten polymer film, a measurement roll positioned downstream of the extruder, and a chill roll positioned downstream of the measurement roll. The measurement roll may be coupled to one or more force measuring devices which may measure a force exerted by the molten polymer film on the measurement roll. The melt tension system may also include a pair of nip rolls positioned downstream of the chill roll and a take-up roll downstream of the pair of nip rolls. The melt tension system may be capable of accurately measuring the melt strength of multilayer polymer films and polymer films such as low density polyethylene (LDPE) or linear low density polyethylene (LLDPE) polymer films. The melt strength measured using the melt tension systems and methods may be used to quantify the bubble stability of the polymer films.

As used in this disclosure, the term polymer "blend" refers to a mixture of two or more different types of polymers in which the individual molecules of each different polymer are interspersed with the molecules of every other polymer in the mixture.

As used in this disclosure, a "monolayer" polymer film refers to a polymer film having a single layer, the single layer comprising a pure polymer or a polymer blend of two or more different polymers.

As used in this disclosure, a "multi-layer" polymer film refers to a polymer film having two or more distinct polymer layers co-extruded together to form a film. The polymer in each of the distinct polymer layers may be the same polymer as in one or more other layers, may be a different polymer from the other polymers in each of the other layers, or may be a blended polymer.

As used in this disclosure, the term "vertical" refers to the direction generally and substantially perpendicular to the ground.

As used in this disclosure, the term "melt temperature" refers to a temperature or range of temperatures at which a polymer transforms from a solid polymer to a molten polymer and/or from a molten polymer to a solid polymer.

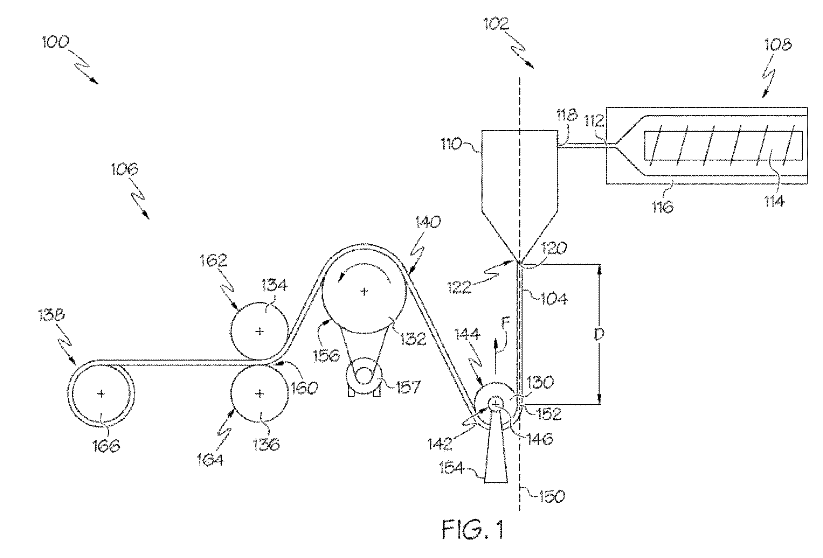

Referring to FIG. 1, a system for measuring a melt strength of a polymer film, such as a multilayer or monolayer film, is illustrated, the system generally identified by reference number 100. The system 100 may include an extruder 102 adapted to extrude a polymer to form a polymer film 104 and a melt tension device 106 adapted to receive the polymer film 104 from the extruder 102 and measure one or more properties of the polymer film 104.

The extruder 102 may include a pressure mechanism 108 and an extrusion die 110 in fluid communication with an outlet 112 of the pressure mechanism 108. The extruder 102 may operate to transform a solid polymer, which may be in the form of pellets, granules, or other solid structures, into a molten polymer by applying pressure, heat, or a combination of pressure and heat to the polymer using the pressure mechanism 108 and introducing or transporting the molten polymer to and through the extrusion die 110 using the pressure mechanism 108. The pressure mechanism 108 may be a single screw extruder, a twin or multiple screw extruder, a ram extruder, or other type of extruder. In one or more embodiments, such as the non-limiting example illustrated in FIG. 1, the pressure mechanism 108 may be a screw extruder having one or more screws 114 rotatable within a chamber 116. The screw 114 may rotate within the chamber 116 to impart heat and pressure to the polymer to transform the polymer from solid pellets or granules into a fully molten or partially molten state. A speed of rotation of the screw 114 or agitator may influence the heat and pressure imparted to the polymer, which may affect the temperature and flow rate of the molten polymer exiting the pressure mechanism 108. In one or more embodiments, the extruder 102 may also include a hopper (not shown) to deliver the polymeric material to an inlet (not shown) of the pressure mechanism 108.

The extrusion die 110 may be positioned adjacent to the outlet 112 of the pressure mechanism 108 and may include one or more inlets 118 in fluid communication with the outlet 112 of the pressure mechanism 108. The extrusion die 110 may receive the molten polymer from the pressure mechanism 108 through the inlet 118. The extrusion die 110 may include an outlet 120. In one or more embodiments, the extrusion die 110 may be a slot die having a lip 122, and the outlet 120 may be an elongated opening or slot positioned along the lip 122. As used in this disclosure, an "elongated slot" refers to a slot having a width that is less than 20% of a length of the slot, the length of the slot being measured along a dimension transverse to the machine direction of the melt tension device 106. The elongated slot may extrude the molten polymer to form the polymer film 104. In one or more embodiments, the extrusion die 110 has an elongated slot shaped to extrude a flat polymer film. As used in this disclosure, the term "polymer film" refers to a continuous polymer structure having a thickness of up to 3 mm.

The slot (i.e., outlet 120) of the extrusion die 110 may have a width from 0.1 millimeters (mm) to 3 mm, from 0.1 mm to 2.5 mm, from 0.1 mm to 2 mm, 0.1 mm to 1.5 mm, from 0.1 mm to 1 mm, from 0.2 mm to 3 mm, from 0.2 mm to 2.5 mm, from 0.2 mm to 2 mm, from 0.2 mm to 1.5 mm, from 0.2 mm to 1 mm, from 0.4 mm to 3 mm, from 0.4 mm to 2.5 mm, from 0.4 mm to 2 mm, from 0.4 mm to 1.5 mm, or from 0.4 mm to 1 mm.

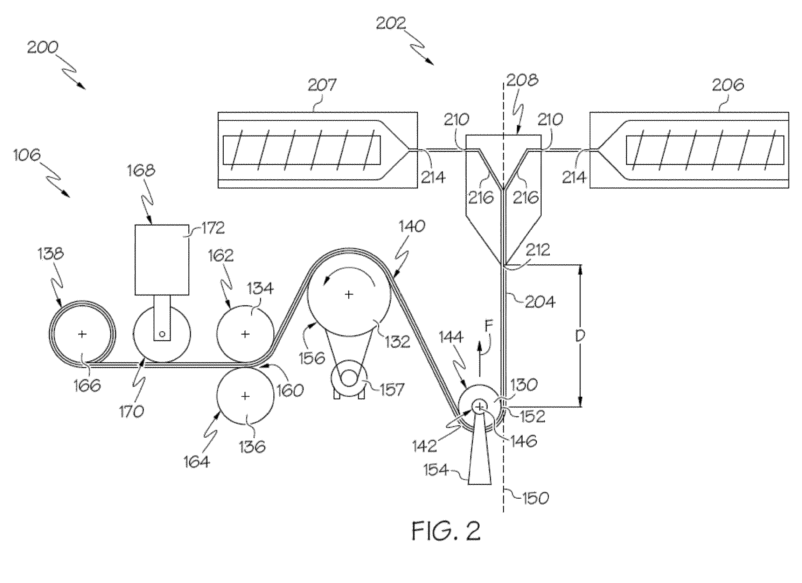

Referring now to FIG. 2, a melt tension system 200 may have an extruder 202 that may be adapted to co-extrude a multilayer polymer film 204. The extruder 202 may include two or more pressure mechanisms 206, 207, and an extrusion die 208 having a plurality of inlets 210 and an outlet 212 that may be an elongated slot. Each inlet 210 of the extrusion die 208 may be fluidly coupled to an outlet 214 of one of the pressure mechanisms 206. The extrusion die 208 may have a plurality of channels 216 within the extrusion die 208 that bring different layers of polymeric materials together to co-extrude the multilayer polymeric film 204.

The polymer films 104, 204 formed by and exiting from the extrusion dies 110 and 208, respectively, may have a thickness from 0.001 mm to 3 mm, from 0.001 mm to 2.5 mm, from 0.001 mm to 1 mm, from 0.001 mm to 0.5 mm, from 0.001 mm to 0.1 mm, from 0.005 mm to 3 mm, from 0.005 mm to 2.5 mm, from 0.005 mm to 1 mm, from 0.005 to 0.5 mm, from 0.005 to 0.01 mm, from 0.01 mm to 3 mm, from 0.01 mm to 2.5 mm, from 0.01 mm to 1.0 mm, from 0.01 mm to 0.5 mm, from 0.05 mm to 3 mm, from 0.05 mm to 2.5 mm, from 0.05 mm to 1 mm, from 0.1 mm to 3 mm, from 0.1 mm to 2.5 mm, from 0.1 mm to 2 mm, from 0.001 mm to 0.005 mm, from 0.005 mm to 0.01 mm, from 0.01 mm to 0.05 mm, from 0.05 mm to 0.1 mm, from 2.5 mm to 3 mm, from 1 mm to 3 mm, or from 1 mm to 2.5 mm. In one or more embodiments, the polymer film 104, 204 may have a thickness from 0.01 mm to 1.0 mm.

The extruder 102, 202 may include a temperature control system for maintaining a temperature of the extruder at a predetermined temperature. The temperature control system may control the temperature of extruder 102, 202 by controlling the pressure inside the extruder 102, 202 and the rotations per minute of the pressure mechanisms 108, 206. In an embodiment, the temperature control system may be adapted to maintain the extruder 102, 202 at a predetermined temperature of from 50 degrees Celsius (°C) to 400°C, from 50°C to 350°C, from 50°C to 300°C, from 50°C to 250°C, from 100°C to 400°C, from 100°C to 350°C, from 100°C to 300°C, from 100°C to 250°C, from 150°C to 400°C, from 150°C to 350°C, from 150°C to 300°C, from 150°C to 250°C, from 175°C to 400°C, from 175°C to 350°C, from 175°C to 300°C, from 175°C to 250°C, or from 175°C to 225°C. Controlling the temperature of the extruder 102, 202 may result in controlling a temperature of the molten polymer film 104, 204 at the outlet 120, 212 of the extrusion die 110, 208. In one or more embodiments, the temperature controller may maintain the extruder 102, 202 at a temperature of 200°C, which may result in a melt temperature of 190°C of the molten polymer film 104, 204.

The extruder 102, 202 may extrude the molten polymer film 104, 204 at a flow rate of from 2 kilograms per hour (kg/hr) to 30 kg/hr, from 2 kg/hr to 15 kg/hr, from 2 kg/hr to 10 kg/hr, from 2 kg/hr to 7 kg/hr, from 3 kg/hr to 30 kg/hr, from 3 kg/hr to 15 kg/hr, from 3 kg/hr to 10 kg/hr, or from 3 kg/hr to 7 kg/hr. In one or more embodiments, the extruder 102, 202 may extrude the molten polymer film 104, 204 at a flow rate of from 3 kg/hr to 7 kg/hr.

Referring back to FIG. 1, the melt tension device 106 of melt tension system 100 may include a measurement roll 130, a chill roll 132, at least a pair of nip rolls 134, 136, and a winder 138. The chill roll 132 may be positioned downstream of the measurement roll 130, the pair of nip rolls 134, 136 may be positioned downstream of the chill roll 132, and the winder 138 may be positioned downstream of the nip rolls 134, 136. The melt tension device 106 may define a pathway 140 in which the polymer film 104 travels, and the pathway 140 may bring the polymer film 104 into at least partial contact with the measurement roll 130, the chill roll 132, the at least two nip rolls 134, 136, and the winder 138.

The measurement roll 130 may be positioned directly downstream of the extrusion die 110 of the extruder 102. The measurement roll 130 may have axial ends 142 and an outer surface 144 and may be freely rotatable about an axis 146. The measurement roll 130 may include two or more bearings (not shown) to allow the measurement roll 130 to freely rotate in response to contact with the polymer film 104 traveling through the pathway 140 defined by the melt tension device 106. The outer surface 144 of the measurement roll 130 may be generally cylindrical and may be modified to reduce adhesion of the molten polymer film 104 to the outer surface 144. The outer surface 144 may be modified by applying a coating, of which a non-limiting example may include a Teflon® coating, for example. The outer surface 144 may also be modified to reduce adhesion by applying a sand or polish treatment to the outer surface 144.

As shown in FIG. 1, the measurement roll 130 may be positioned directly downstream of the extrusion die 110. In one or more embodiments, the measurement roll 130 may be positioned vertically below the extrusion die 110 such that the molten polymer film 104 may travel along a substantially vertical downward path, relative to the ground, from the outlet 120 of the extrusion die 110 to a point 152 at which the molten polymer film 104 first contacts the measuring roll 130. In other embodiments, the measuring roll 130 may be positioned such that a line extending vertically downward from the outlet 120 of the extrusion die 110 may be tangent to the outer surface 144 of the measurement roll 130. In other embodiments, the measurement roll 130 may be spaced apart from a vertical plane 150 passing through the outlet 120 of the extrusion die 110 such that the molten polymer film 104 follows a substantially non-vertical path from the outlet 120 of the extrusion die 110 to the measurement roll 130.

The measurement roll 130 may be spaced apart from the extrusion die 110 by a distance **D** measured from the outlet 120 of the extrusion die 110 to the point 152 at which the molten polymer film 104 first contacts the measurement roll 130. The distance **D** between the measurement roll 130 and the extrusion die 110 may be from 1 mm to 400 mm, from 1 mm to 350 mm, from 1 mm to 300 mm, from 1 mm to 250 mm, from 1 mm to 200 mm, from 50 mm to 400 mm, from 50 mm to 350 mm, from 50 mm to 300 mm, from 50 mm to 250 mm, from 50 mm to 200 mm, from 100 mm to 400 mm, from 100 mm to 350 mm, from 100 mm to 300 mm, from 100 mm to 250 mm, from 100 mm to 200 mm, from 200 mm to 250 mm, from 250 mm to 300 mm, from 300 mm to 350 mm, from 350 mm to 400 mm, or from 300 mm to 400 mm. In one or more embodiments, the distance **D** from the measuring roll 130 to the extrusion die 110 may be from 300 mm to 400 mm. In one or more embodiments, the distance **D** from the measurement roll 130 to the extrusion die 110 may be 350 mm.

The measurement roll 130 may be coupled to one or more force measuring devices 154 for measuring a force **F** exerted by the molten polymer film 104 on the measurement roll 130. In one or more embodiments, the force measuring devices 154 may be load cells. In one or more embodiments, the melt tension device 106 may include at least two force measuring devices 154, and each of the two ends 142 of the measurement roll 130 may be coupled to one of the at least two force measuring devices 154. The force measuring device 154 may be capable of measuring forces of from 0.05 kilogram-force (kg*_{F}*) to 25 kg*_{F}*, from 0.05 kg*_{F}* to 20 kg*_{F}*, from 0.05 kg*_{F}* to 15 kg*_{F}*, from 0.05 kg*_{F}* to 10 kg*_{F}*, from 0.1 kg*_{F}* to 25 kg*_{F}*, from 0.1 kg*_{F}* to 20 kg*_{F}*, from 0.1 kg*_{F}* to 15 kg*_{F}*, from 0.1 kg*_{F}* to 10 kg*_{F}*, from 1 kg*_{F}* to 25 kg*_{F}*, from 1 kg*_{F}* to 20 kg*_{F}*, from 1 kg*_{F}* to 15 kg*_{F}*, or from 1 kg*_{F}* to 10 kg*_{F}*. The force measuring device 154 may include a cooling system (not shown) employing cooling air, or other cooling fluid, to cool the force measuring device 154, which may prevent overheating of the force measuring device 154.

The force measuring device(s) 154 may measure the force **F** exerted on the measurement roll 130 and may convert the force **F** to an electrical signal for communication to one or more other devices. The electrical signal may be an analog signal or a digital signal. In one embodiment, the force measuring device(s) 154 may be coupled to an analog recorder (not shown), such as a chart recorder for example, which is adapted to record the melt strength signal during operation of the melt tension system 100. The force measuring device(s) 154 may also be coupled to an analog display device for displaying the measured force during operation of the melt tension system 100. The force measuring device(s) 154 may also be in electronic communication with one or more electronic display devices, processors, electronic storage media, or other digital device for further retention and/or processing of measurement data measured by the force measuring device(s) 154. In one or more embodiments, the force measuring device(s) 154 may include a digital display which displays the current force **F** being measured by the force measuring device(s) 154.

Referring back to FIG. 1, the chill roll 132 may be positioned downstream of the measurement roll 130. The chill roll 132 may include a generally cylindrical outer surface 156 and a cooling system (not shown) that maintains a surface temperature of the outer surface 156 of the chill roll 132 at a cooling temperature. In one or more embodiments, the chill roll 132 may use cooling water to provide cooling to the outer surface 156 of the chill roll 132. The surface temperature may be maintained at the cooling temperature of from 1°C to 40°C, from 1°C to 30°C, from 1°C to 25°C, from 1 °C to 20°C, from 5°C to 40°C, from 5°C to 30°C, from 5°C to 25°C, from 5°C to 20°C, from 10°C to 40°C, from 10°C to 30°C, from 10°C to 25°C, from 10°C to 20°C, or from 15°C to 20°C. In one or more embodiments, the surface temperature of the outer surface 156 of the chill roll 132 may be maintained at 18°C. The pathway 140 of the melt tension device 106 may bring the molten polymer film 104 into at least partial contact with the outer surface 156 of the chill roll 132 downstream of the measurement roll 130. The chill roll 132 may provide cooling to the molten polymer film 104 through contact of the molten polymer film 104 with the outer surface 156 of the chill roll 132 and may cause the molten polymer film 104 to at least partially or fully solidify into a polymer film. Increasing or decreasing an amount of a surface area of contact between the polymer film 104 and the outer surface 156 of the chill roll 132, such as by increasing a degree of wrap of the polymer film 104 around the chill roll 132 for example, may increase or decrease an amount of cooling of the polymer film 104 as it traverses around the chill roll 132.

The chill roll 132 may be operatively coupled to a drive mechanism 157, such as a drive motor, for example, such that the chill roll 132 is driven. The drive mechanism 157 may maintain the chill roll 132 at a speed equivalent to a polymer film speed of from 1 meter per minute (m/min) to 20 m/min, from 1 m/min to 15 m/min, from 1 m/min to 10 m/min, from 1 m/min to 7 m/min, from 2 m/min to 20 m/min, from 2 m/min to 15 m/min, from 2 m/min to 10 m/min, from 2 m/min to 7 m/min, from 3 m/min to 20 m/min, from 3 m/min to 15 m/min, from 3 m/min to 10 m/min, or from 3 m/min to 7 m/min. In one or more embodiments, the drive mechanism 157 may maintain the chill roll 132 at a chill roll speed equivalent to a polymer film speed of 3.5 m/min. In other embodiments, the drive mechanism 157 may be adapted to operate the chill roll 132 at variable speeds. In yet other embodiments, the drive mechanism 157 may be controlled by a processor to dynamically control the speed of the chill roll 132 relative to a speed of the molten polymer film 104 contacting the chill roll 132 and/or a rate of extrusion of the molten polymer film 104 from the extruder 102.

The pair of nip rolls 134, 136 may be positioned downstream of the chill roll 132 and may include a first nip roll 134 and a second nip roll 136. The first nip roll 134 and the second nip roll 136 may be spaced apart from one another to define a nip 160 between an outer surface 162 of the first nip roll 134 and an outer surface 164 of the second nip roll 136. The polymer film 104 travels through the nip 160 defined by the first nip roll 134 and the second nip roll 136. The first nip roll 134 and second nip roll 136 may be driven or may be freely rotatable about their respective axis of rotation.

The winder 138 may be positioned downstream of the pair of nip rolls 134, 136 and may operate to collect or wind the polymer film 104 onto a take-up roll 166. The winder 138 may be adapted to wind the polymer film 104 at a speed of from 0.1 m/min to 50 m/min, from 0.1 m/min to 30 m/min, from 0.1 m/min to 20 m/min, from 0.1 m/min to 10 m/min, from 1 m/min to 50 m/min, from 1 m/min to 30 m/min, from 1 m/min to 20 m/min, from 1 m/min to 10 m/min, from 2 m/min to 50 m/min, from 2 m/min to 30 m/min, from 2 m/min to 20 m/min, from 2 m/min to 10 m/min, from 4 m/min to 50 m/min, from 4 m/min to 30 m/min, from 4 m/min to 20 m/min, or from 4 m/min to 10 m/min. In one or more embodiments, the winder 138 may be integrated with the drive mechanism 157 of the chill roll 132 and/or the extruder 102 to wind the polymer film 104 at a speed substantially similar to the speed of the polymer film 104 through the melt tension device 106 and/or the rate of extrusion of molten polymer film 104 from the extruder 102.

Referring to FIG. 2, the melt tension device 106 may optionally include a web tensioner 168 positioned downstream of the chill roll 132. In one or more embodiments, the web tensioner 168 may be positioned downstream of the pair of nip rolls 134, 136 and upstream of the winder 138. The web tensioner 168 may include a contact surface 170 and a biasing mechanism 172 coupled to the contact surface 170. The biasing mechanism 172 may change a position of the contact surface 170 to increase or decrease a tension on the polymer film 104 contacting the web tensioner 168. In one or more embodiments, the contact surface 170 of the web tensioner 168 may be an outer surface of a tension roll, which is coupled to the biasing mechanism 172. The web tensioner 168 may capable of placing tension on the polymer film 104 of from 0.01 kg*_{F}* to 3 kg*_{F}*, 0.01 kg*_{F}* to 2 kg*_{F}*, from 0.01 kg*_{F}* to 1 kg*_{F}*, from 0.01 kg*_{F}* to 0.5 kg*_{F}*, from 0.05 kg*_{F}* to 3 kg*_{F}*, from 0.05 kg*_{F}* to 2 kg*_{F}*, from 0.05 kg*_{F}* to 1 kg*_{F}*, from 0.05 kg*_{F}* to 0.5 kg*_{F}*, from 0.1 kg*_{F}* to 3 kg*_{F}*, from 0.1 kg*_{F}* to 2 kg*_{F}*, from 0.1 kg*_{F}* to 1 kg*_{F}*, from 0.1 kg*_{F}* to 0.5 kg*_{F}*, from 0.5 kg*_{F}* to 3 kg*_{F}*, from 0.5 kg*_{F}* to 2 kg*_{F}*, or from 0.5 kg*_{F}* to 1 kg*_{F}*. The pathway 140 of the polymer film 104 through the melt tension device 106 may bring the polymer film 104 out of the nip 160 defined between the first nip roll 134 and the second nip roll 136, into contact with the contact surface 170 of the web tensioner 168, and then into the winder 138 positioned downstream of the web tensioner 168.

The melt tension device 106 may also optionally include a controller (not shown) operatively coupled to one or more of the extruder 102, force measuring devices 154, drive mechanism 157 of the chill roll 132, cooling system of the chill roll 132, winder 138, or web tensioner 168. The controller may be adapted to control a speed of the molten polymer film 104 along the pathway 140 through the melt tension device 106 by manipulating a rate of extrusion of the polymer film 104, the speed of the chill roll 132 drive mechanism 157, the tension applied by the web tensioner 168, and the speed of the winder 138. The controller may also be adapted to receive the force measurement signal from the force measuring device 154 and perform one or more operations, which may include storing the force measurement data in a storage media, transmitting the force measurement data to a remote processor, performing one or more calculations using the force measurement data, or other operation.

Referring to FIG. 1, during operation of the melt tension system 100, a polymer, generally in the form of solid pellets or granules, may be added to the hopper (not shown) of the extruder 102 and may be fed to the pressure mechanism 108. Through application of heat and pressure to the solid polymer pellets or granules, the pressure mechanism 108 may transform the solid polymer pellets or granules into a molten polymer. As used in this disclosure, the term "molten" polymer refers to a polymer that is in a liquid form in which the polymer is flowable but has constant volume. The pressure mechanism 108 may introduce the molten polymer to the extrusion die 110, for which the outlet 120 is a slot. The molten polymer may flow through the extrusion die 110 and exit from the outlet 120 of the extrusion die 110. As the molten polymer exits from the extrusion die 110, the molten polymer may conform to the slotted shape of the outlet 120 of the extrusion die 110. The slotted shape of the outlet 120 may cause the molten polymer to form the polymer film 104 upon exiting the extrusion die 110. The extrusion die 110 may be adjusted to change a thickness of the polymer film 104. In one or more embodiments, the extrusion die 110 may be adapted to co-extrude a multi-layer polymer film, and the extrusion die 110 may be adjusted to change the thickness of individual layers of the co-extruded multi-layer film.

Upon exiting the extrusion die 110, the polymer film 104 may be a partially or fully molten polymer. The polymer film 104 may be manually fed through the pathway 140 defined through the melt tension device 106. As previously described, the pathway 140 may begin with passing the polymer film 104, which is a partially or fully molten polymer, around the measuring roll 130. The polymer film 104 may partially or fully contact the measuring roll. The polymer film 104, still a partially or fully molten polymer, is then wrapped partially or fully around the chill roll 132. The polymer film 104 may be a partially or fully molten polymer in a portion of the pathway 140 from the outlet 120 of the extrusion die 110, around the measuring roll 130, and to the chill roll 132. The chill roll 132 may provide cooling to the polymer film 104 to partially or fully solidify the polymer film 104 such that the polymer film 104 may be a partially or fully solid polymer downstream of the chill roll 132.

The polymer film 104, now a partially or fully solid polymer film, may be passed through the nip 160 defined between the first nip roll 134 and the second nip roll 136 and then may be collected on the take-up roll 166 of the winder 138. Optionally as shown in FIG. 2, the polymer film 104 may contact the contact surface 170 of the web tensioner 168, which may apply tension to the polymer film 104.

The melt tension system can be used to measure the melt tension (i.e., melt strength) and study the web stability of monolayer and multilayer polymer films under actual film-making conditions.

A method for determining a melt strength of a polymer film may comprise extruding a polymer to form a polymer film 104 and passing the polymer film 104 at least partially around a measuring roll 130 coupled to a force measuring device 154, at least partially around a chill roll 132 positioned downstream of the measuring roll 130, and through a nip 160 defined between two nip rolls 134, 136 positioned downstream of the chill roll 132. The polymer film 104 may be a partially or fully molten polymer film when at least partially contacting the measuring roll 130. The method for determining the melt strength of a polymer film 104 further includes measuring a force exerted on the measuring roll 130 by the polymer film 104 using the force measuring device 154.

In one or more embodiments, the polymer film 104 may be a multi-layer polymer film. The polymer film 104 may be any polymer that can be extruded into a flat film. The polymer film 104 may include an organic or biopolymer. The polymers may include various C₂-C₂₀ olefin containing polymers. For example, the polymer may be polyethylene polymers. The polymer film 104 may include thermoplastic polymers or polymers with varying degrees of cross-linking.

Various polymers are contemplated as being suitable. Non-limiting examples of suitable polymers include polyethylene, polypropylene, polycarbonate, polyimide, PVOH, polyester, polyamide, PET, EVOH, PVC, polystyrene, polyacrylonitrile, silicone-based polymers, polymethyl methacrylate, polytetrafluoroethylene, aramids, natural and synthetic rubbers, nylons, epoxies, polyurethanes, or combinations of these. The polymer film 104 may includes any additives or fillers normally used in polymer films, such as talc, calcium carbonate, colorants, crosslinking agents, or other additives, for example.

As used herein, "polyethylene polymer" refers to a polymer made of 100% by weight of ethylene-monomer units, i.e., a homopolymer, or to copolymers produced with at least 50% by weight of ethylene-monomer units and comonomers. These comonomers may include α-olefins, e.g. propylene, 1-butene, 1-pentene, 1-hexene, 4-methyl-1-pentene, 1-heptene, 1-octene, 1-nonene, 1-decene, and combinations thereof. Additionally, the comonomers may include acryclic acid or acylic acid derivatives to produce polymers such as ethylene acrylic acid (EAA), or ethylene methyl acrylate (EMA).

Various polyethylene polymers are contemplated as suitable. For example and not by way of limitation, the polyethylene polymers may include a high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), very low density polyethylene (VLDPE), and ultra low density polyethylene (ULDPE), or mixtures thereof. In one or more embodiments, the polymer film may comprise LDPE. In other embodiments, the polymer film may comprise LLDPE.

Referring again to FIG. 1, the method for determining the melt strength of a polymer film 104 may further comprise winding the polymer film on a winder positioned downstream of the nip 160. In one or more embodiments, the polymer film 104 may be collected on a take-up roll 166 of the winder. The method for determining the melt strength of a polymer film 104 may further comprise cooling the polymer film 104 with the chill roll 132. The method may further comprise maintaining the chill roll 132 at a temperature less than a melt temperature of the polymer film 104. The method may further comprise applying a tension to the polymer film 104 using the web tensioner 168 positioned downstream of the chill roll 132.

The method may also comprise extruding the polymer film 104 and passing the polymer film 104 around the measuring roll 130, around the chill roll 132, and through the nip 160 until the polymer film 104 attains a steady state. The force **F** exerted on the measurement roll 130 is measured by the force measuring device 154 while the polymer film 104 is in said steady state. As used in this disclosure, a "steady state" refers to a condition or a period of time during which all process variables and parameters, including the temperature of the polymer film 104, linear speed of the polymer film 104, extrusion rate, composition of the polymer film 104, and other process variables of the melt tension system 100 are stable and maintained within acceptable limits. In one or more embodiments, the method may comprise running the melt tension system 100 until the melt tension system 100 attains a steady state, in which the molten polymer film 104 has a generally consistent composition and a generally consistent extrusion rate and linear speed through the melt tension system 100. When the melt tension system 100 is in a steady state, the melt tension of the molten polymer film 104 may be consistent and stable such that a reading or recording of the force **F** obtained from the force measuring device may be generally indicative of the melt tension of the molten polymer film 104 at the steady state.

The method may also comprise cleaning the extruder 102. Cleaning the extruder 102 may comprise cleaning the lips 122 of the extrusion die 110 with a cloth, such as a wool fiber cloth and removing residual polymer from inside the lips 122 using a cleaning tool. Cleaning the extruder 102 may also include filling the hopper of the extruder 102 with a cleaning polymer, such as LDPE pellets or other polymer, for example, starting the extruder 102, and allowing the molten polymer to exit from the extrusion die 110 for a predetermined period of time. The speed of the pressure mechanism 108 may be increased during cleaning. In one or more embodiments, the molten cleaning polymer may be discharged from the extrusion die 110 until no more residues are visible exiting from the extrusion die 110.

The method of determining a melt strength of a polymer film 104 may also include positioning the measurement roll 130 vertically below the extrusion die 110 so that a vertical line extending vertically downward from the outlet 120 of the extrusion die 110 may be tangent to the outer surface 144 of the measurement roll 130. The distance **D** from the extrusion die 110 to the point 152 at which the polymer film 104 first contacts the measurement roll 130 may be adjusted from 1 mm to 400 mm. The method may comprise manually guiding the polymer film 104 from the extrusion die 110, around the measurement roll 130, around the chill roll 132, through the nip 160, and to the winder 138.

The method of determining a melt strength of a polymer film 104 may include calibrating the force measuring device 154. Calibrating the force measuring device 154 may include running the melt tension system 100 until the melt tension system 100 and/or the polymer film 104 attain a steady state, stopping the melt tension system 100, removing the polymer film 104 from the measurement roll 130, zeroing the force measuring device 154, returning the polymer film 104 into contact with the measurement roll 130, starting the melt tension system 100, running the melt tension system 100 until the melt tension system 100 and/or the polymer film 104 attain a steady state, stopping the melt tension system 100, removing the polymer film 104 from the measurement roll 130, and observing the force value displayed by the force measuring device 154. If the force value displayed by the force measuring device 154 returns to zero gram-force (g*_{F}*) with a standard deviation of +/- 20 g*_{F}* then the force measuring device 154 may be considered to be calibrated. If the force value displayed by the force measuring device 154 does not return to zero with a standard deviation of +/- 20 g*_{F}*, then the calibration steps may be repeated until the force measuring device 154 is calibrated.

The method of determining a melt strength of a polymer film 104 may further comprise operating the melt tension system 100 at a constant speed. In one or more embodiments, the method of determining a melt strength of a polymer film 104 may include measuring the force **F** exerted on the measurement roll 130 for a variable speed or over a period of time during which the speed of the melt tension system 100 steadily increases. In one or more embodiments, the method may include running the melt tension system 100 at constant speed until the melt tension system 100 and/or the polymer film 104 attains a steady state and then steadily increasing the speed of the melt tension system 100 while simultaneously recording the force **F** exerted on the measurement roll 130.

In other embodiments, a method of determining a melt strength of a polymer film 104 may include providing a system 100 for measuring the melt strength of the polymer film 104. The system 100 may comprise an extruder 102 having an extrusion die 110 adapted to extrude one or more polymers to form a molten polymer film 104; a measurement roll 130 positioned downstream of the extruder 102, the measurement roll 130 having one or more load cells 154 coupled thereto, wherein the one or more load cells 154 measure a force exerted by the molten polymer film 104 on the measurement roll 130; a chill roll 132 positioned downstream of the measurement roll 130, the chill roll 132 operatively coupled to a drive mechanism 157, wherein the chill roll 132 may cool the molten polymer film 104 to produce a polymer film; at least two nip rolls 134, 136 positioned downstream of the chill roll 132; and a take-up roll 166 positioned downstream of the at least two nip rolls 134, 136. The system 100 may define a pathway 140 in which the polymer film 104 may travel. The pathway 140 may bring the polymer film 104 into contact with the measurement roll 130, the chill roll 132, the at least two nip rolls 134, 136, and the take-up roll 166.

The method may further include extruding the molten polymer film 104, passing the molten polymer film 104 having a single layer or multiple layers through the pathway 140 from the extruder 102 to the take-up roll 166, and measuring a force **F** exerted on the one or more load cells 154 caused by contact of the molten polymer film 104 with the measurement roll 130.

The melt tension systems and methods disclosed herein may be used to measure the melt tension of monolayer and multilayer polymer films and study the web stability of monolayer and multilayer polymer films under real industrial conditions, such as those that are encountered in extrusion coating, extrusion lamination, co-extrusion, and other film forming processes. The melt tension systems and methods may also be used to measure the melt tension and investigate the synergistic effects of different polymer blends utilized in monolayer and multilayer polymer films. Melt tension may be related to a bubble stability of a polymer. Qualitative observations of bubble stability for polymer films may be used to evaluate the output capability of a polymer. The melt tension systems and methods may be used to measure melt tension as a way of quantifying the bubble stability of polymers used to make polymer films. The melt tension systems and methods may be used to continuously or periodically measure the melt tension of a continuously extruded polymer film, and the melt tensions measured on the continuously extruded polymer film may be used to study the effects of changes to one or more process variables, material characteristics, or polymer film composition on the melt tension of the continuously extruded polymer film.

Some polymers, such as LLDPE for example, may have less branching in the polymer chain and, thus, may have weaker intermolecular forces and lower tensile strength than other polymers with a greater degree of branching. The decreased tensile strength of these polymers may cause problems in measuring the melt tension and studying the web stability of these polymers. In particular, due to the lower tensile strength, these low-tensile-strength polymers may not be able to withstand the forces imposed on the polymer by existing melt strength measuring devices and may tend to break or fail before an adequate measurement can be obtained. The melt tension systems and methods of this disclosure may enable measurement of the melt tension characteristics and enable study of the web stability of these low-tensile-strength polymers, in addition to other polymers.

### EXAMPLES

The following examples demonstrate the functionality of the melt tension system, the use of the melt tension system and methods for evaluating the synergistic effects of polymer blends, the reproducibility of the methods of measuring the melt tension of a polymer film using the melt tension system, and use of the melt tension systems and methods to quantitatively evaluate web stability.

### Melt Tension System Setup and Calibration

For each of the following Examples, a melt tension system was provided that included an extruder, a measurement roll coupled to one or more load cells, a chill roll, a pair of nip rolls, a web tensioner, and a winder. The extruder included at least two pressure mechanisms and a slot die adapted to co-extrude two polymers into a two-layer polymer film. The melt tension system was then calibrated according to the following procedure.

The temperature profile of the extruder was set to 200°C to obtain a melt temperature of 190°C. The cooling water was connected to the chill roll and the temperature of the chill roll was set to 18°C. The temperature of the extrusion die was allowed to stabilize, and the die gap opening of the extrusion die was adjusted to 0.8 mm. The lips of the die were cleaned with a wool fiber cloth and any residual polymer was removed from inside the lips using a copper or brass cleaning tool. The hoppers of the extruder were filled with LDPE, such as DOW™ LDPE 310E from The Dow Chemical Co., Midland, MI to clean the extruder and stabilize the melt tension system.

The extruder was started, and the molten polymer was allowed to exit from the extrusion die for 5 minutes. The speeds of the pressure mechanisms were slowly increased to 10 rpm to 20 rpm or 30 rpm. The molten polymer was allowed to exit from the extrusion die for another few minutes until no more residues were visible exiting from the extrusion die. The extruder was stopped, and the measurement roll was positioned vertically below the extrusion die so that a vertical line extending vertically downward from the outlet of the extrusion die was tangent to the outer surface of the measurement roll. The distance from the extrusion die to the point at which the polymer film first contacted the measurement roll was adjusted to 350 mm, and the electric cables were coupled to the load cells coupled to the measurement roll.

The extruders were started and set to a production rate of from 3 kg/hr to 4 kg/hr. Once the extrusion die was adjusted to the proper ratio, the molten polymer film was then manually guided around the measurement roll, around the chill roll, through the nip defined between the pair of nip rollers, into contact with the web tensioner, and then into the winder. The speed of the chill roll was set to 3.5 m/min, and the web tensioner was set to a force of 0.6 kg*_{F}*. The melt tension system was run for 30 minutes to allow the polymer film to stabilize.

Once the polymer film was stabilized, the load cells were calibrated by removing the polymer film from the measurement roll and observing the melt strength display. If the melt strength display did not return to zero with a standard deviation of +/- 20 g*_{F}* when the polymer film was removed from the measurement roll, then the display was reset to zero. The polymer film was returned to the measurement roll and the melt tension system was returned to operation for 10 minutes to stabilize the polymer film and attain a steady state of the melt tension system. The load cells were checked again to make sure the indicator returned to zero with a maximum deviation of +/- 20 g*_{F}* with the polymer film removed from the measurement roller.

### Example 1: Measuring the Melt Strength of Co-extruded Structures

In the following Example 1, the melt strengths of various co-extruded two-layer polymer films were measured using the melt tension system previously described.

After calibrating the load cells, the hopper of one of the pressure mechanisms of the extruder was filled with DOW™ LDPE 320E and the hopper of the second pressure mechanism was filled with DOWLEX™ 2103, an LLDPE supplied by The Dow Chemical Co., Midland, MI. The extrusion die was then adjusted to achieve the desired composition of the co-extruded two-layer polymer film structure to be tested. The following weight ratios of the LDPE layer to the LLDPE layer were tested: 100:0, 80:20, 60:40, 40:60, 20:80, and 0:100. For each weight ratio tested, the extrusion die was adjusted to give the desired composition of the two-layer polymer film structure. At each composition, the melt tension system was run for 30 minutes to stabilize the two-layer polymer film. The extrusion parameters were checked to make sure they were correct and the value of the melt tension in grams-force (g*_{F}*) was recorded from the load cell display.

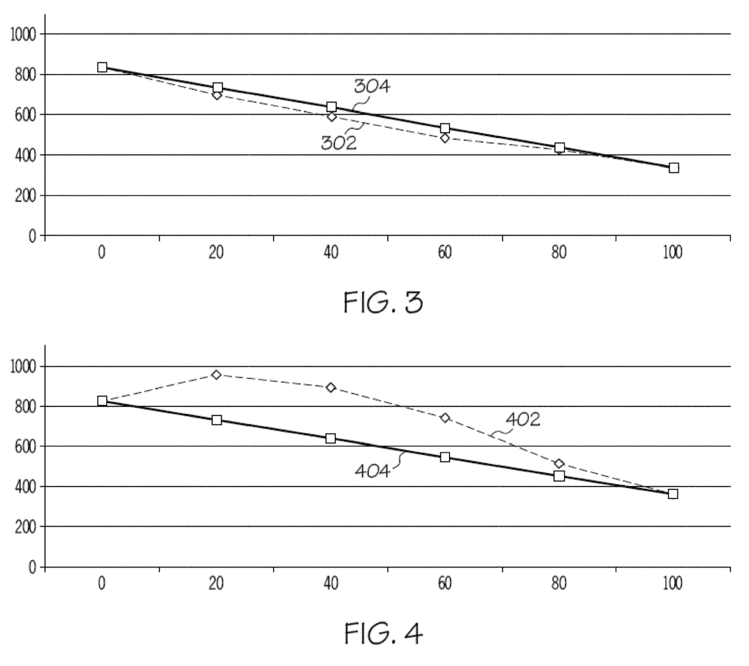

The measured melt tension 302 for each of the co-extruded two-layer LDPE/LLDPE polymer films of Example 1 are shown in FIG. 3. Also included in FIG. 3 are weighted average melt tensions 304 calculated for each composition of the co-extruded two-layer LDPE/LLDPE polymer films of Example 1. The weighted average melt tensions were calculated as the sum of the weight percent multiplied by the measured melt tension for each individual polymer in the blend. Table 1, subsequently included, provides the measured melt tension and calculated weighted average melt tension for each of the compositions, as well as a calculated difference between the weighted average melt tension and the measured melt tension value.

**Table 1: Measured Melt Strength vs. Composition for a Coextruded Polymer Film Comprising a Layer of LDPE and a Layer of LLDPE of Example 1**

| Coextruded Layer Composition | | Measured Melt Tension | Calculated Weighted Average Melt Tension | Difference Between Measured and Calculated |
|---|---|---|---|---|
| LDPE (wt. %) | LLDPE (wt. %) | Force (g*_{F}*) | Force (g*_{F}*) | % |
| 100 | 0 | 838 | 838 | 0.00 |
| 80 | 20 | 700 | 738.4 | -5.20 |
| 60 | 40 | 593 | 638.8 | -7.17 |
| 40 | 60 | 488 | 539.2 | -9.50 |
| 20 | 80 | 428 | 439 | -2.51 |
| 0 | 100 | 340 | 340 | 0.00 |

As shown in FIG. 3, the measured melt tension 302 varies linearly as a function of the composition of the coextruded two-layer polymer film. Not wishing to be bound by theory, it is believed that the linear correlation of the melt tension to the composition of the two-layer polymer film is expected because no interaction is expected between the LLDPE and LDPE molten resins, which are segregated into separate layers. As shown in Table 1, the error of the measured melt tension 302 versus the calculated weighted average melt tension 304 is less than 10% of the calculated weighted average melt tension 304, which indicates that the accuracy of the melt tension system may be an acceptable accuracy for characterizing web stability.

### Example 2: Investigating Synergistic Effects of Polymer Blends

In the following Example 2, the melt tension system was used to measure the melt tension for each of a plurality of polymer blends having varying ratios of LDPE and LLDPE. Some polymer blends exhibit properties, in particular melt tension, that are additive, meaning that the properties of the blend are approximately equal to a weighted average of the properties of the individual polymers, resulting in a generally linear relationship between the property and the weight ratio of the polymers in the blend. However, some polymer blends, such as blends of LDPE and LLDPE, have been known to exhibit a synergistic effect, for which the properties, such as melt tension, of the polymer blend are enhanced by the combination of polymers. As a result of the synergistic effect, the properties of these blends are expected to deviate substantially from linear. The measured melt tensions of various compositions of LDPE/LLDPE polymer blends obtained using the melt tension system discussed above were compared against a calculated linear relationship between melt tension to identify a synergistic effect of combining LDPE and LLDPE into a polymer blend.

After calibrating the load cells, the hopper of one of the pressure mechanisms of the extruder was filled with DOW™ LDPE 320 from the The Dow Chemical Co., Midland, MI. The extrusion die was setup to extrude a monolayer polymer film. The melt tension system was run until the melt tension system and polymer film attained a steady state condition and the melt tension was measured while the melt tension system and the polymer film were at steady state. Once the melt tension of the LDPE was measured, a polymer blend of 80 wt. % LDPE and 20 wt. % DOWLEX™ 2103 was added to the hopper of the pressure mechanism. The melt tension system was again run until the melt tension system and the polymer film reached a steady state, and the melt tension was measured. The above process was repeated for polymer blends having the following weight ratios of LDPE to LLDPE: 60:40, 40:60, 20:80, and 0:100. The compositions of the polymer blends of Example 2 were chosen to be the same as the overall compositions of the co-extruded multi-layer polymer films of Example 1. At each composition, the melt tension system was run for 30 minutes to stabilize melt tension system until the melt tension system and the polymer film reached a steady state. The extrusion parameters were checked to make sure they were correct and the value of the melt tension in grams-force (g*_{F}*) was recorded from the load cell display.

The measured melt tension 402 for each of the monolayer polymer films, which have a blend of LDPE and LLDPE, of Example 2 are shown in FIG. 4. Also included in FIG. 4 are weighted average melt tensions 404 calculated for each composition of the monolayer polymer film. The calculated weighted average melt tension 404 exhibits a linear relationship between melt tension and composition and provides an estimate of the melt tensions of the blends that would be expected in the absence of a synergistic effect. The weighted average melt tensions were calculated as the sum of the weight percent multiplied by the measured melt tension for each individual polymer in the blend. Table 2, subsequently included, provides the measured melt tension and calculated weighted average melt tension for each of the compositions, as well as a calculated difference between the weighted average melt tension and the measured melt tension value.

**Table 2: Measured Melt Strength vs. Composition for a Monolayer Polymer Film Comprising Various Blends of LDPE and LLDPE of Example 2**

| LDPE/LLDPE Monolayer Blend Composition | | Measured Melt Tension | Calculated Weighted Average Melt Tension | Difference Between Measured and Calculated |
|---|---|---|---|---|
| LDPE (wt. %) | LLDPE (wt. %) | Force (g*_{F}*) | Force (g*_{F}*) | % |
| 100 | 0 | 830 | 830 | 0.00 |
| 80 | 20 | 960 | 736 | 30.43 |
| 60 | 40 | 900 | 642 | 40.19 |
| 40 | 60 | 750 | 548 | 36.86 |
| 20 | 80 | 520 | 454 | 14.54 |
| 0 | 100 | 360 | 360 | 0.00 |

As shown in FIG. 4, the measured melt tension 402 of the monolayer polymer film for each polymer blend differs greatly from the calculated weighted average melt tension derived by assuming a linear relationship between composition and melt tension. As indicated in Table 2, the measured melt tension of 360 g*_{F}* for the monolayer polymer film having 100 wt. % LLDPE was less than half of the measured melt tension of 830 g*_{F}* for the monolayer polymer film having 100 wt. % LDPE and 0 wt. % LLDPE. For a simple linear relationship between composition and melt tension, one would expect the monolayer polymer film having 80 wt. % LDPE and 20 wt. % LLDPE to be closer to the weighted average melt tension of 736 g*_{F}* estimated for an 80:20 LDPE to LLDPE blend. However, as illustrated in FIG. 4 and shown in Table 2, the melt tension of 960 g*_{F}* for the 80:20 LDPE to LLDPE monolayer polymer film is substantially higher than the weighted average melt tension estimated for the blend..

The melt tensions measured by the melt tension system for each of the polymer blends may indicate the presence of a synergistic effect occurring between the LDPE and the LLDPE in the polymer blends. Not wishing to be bound by theory, it is believed that the molecules of the LDPE and the LLDPE interact with each other, which may result in the synergistic behavior of the polymer blends. This observed synergistic effect shown by the data obtained using the melt tension system and method is consistent with the known synergistic behaviors of blends of LDPE and LLDPE. These results may confirm that the melt tension system and methods may be effective in reproducing data to support observed trends in the industrial environment. Thus, the melt tension system may be used to investigate synergistic effects of polymer blends in monolayer films.

### Example 3: Reproducing the Trends Observed In Example 1

In the following Example 3, samples identical in composition and configuration were prepared and tested using the same melt tension system and methods to determine the reproducibility of results using the system. The samples for Example 3 were prepared from DOW™ LDPE 320 and DOWLEX™ 2103 in accordance with the process described previously in relation with Examples 1 and 2. The LDPE and LLDPE used in Example 3 were from different manufacturing lot numbers than the materials used in Examples 1 and 2.

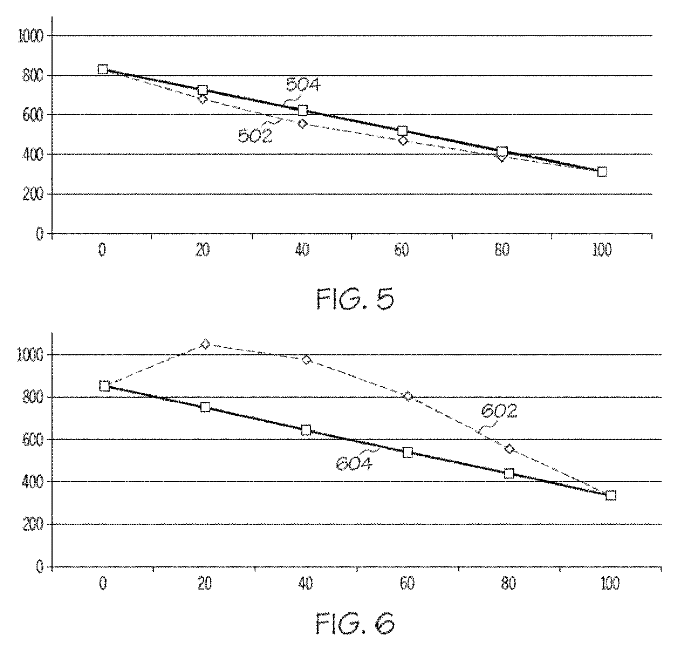

The measured melt tension 502 for each of the co-extruded two-layer LDPE/LLDPE polymer films of Example 3 are shown in FIG. 5. Also included in FIG. 5 are the weighted average melt tensions 504 calculated for each co-extruded two-layer polymer film. Table 3, subsequently included, provides the measured melt tension and calculated weighted average melt tension for each of the compositions, as well as a calculated difference between the weighted average melt tension and the measured melt tension.

**Table 3: Measured Melt Strength vs. Composition for a Coextruded Polymer Film Comprising a Layer of LDPE and a Layer of LLDPE of Example 3**

| Coextruded Layer Composition | | Ex. 3 Measured Melt Tension | Ex. 3 Weighted Average Melt Tension | Difference Between Measured and Weighted Average |
|---|---|---|---|---|
| LDPE (wt. %) | LLDPE (wt. %) | Force (g*_{F}*) | Force (g*_{F}*) | % |
| 100 | 0 | 828 | 828 | 0.00 |
| 80 | 20 | 680 | 725.4 | -6.26 |
| 60 | 40 | 557 | 622.8 | -10.57 |
| 40 | 60 | 470 | 520.2 | -9.65 |
| 20 | 80 | 390 | 417.6 | -6.61 |
| 0 | 100 | 315 | 315 | 0.00 |

As shown in FIG. 5, the measured melt tension 502 varies linearly as a function of the composition of the coextruded two-layer polymer film. This linear relationship between the compositions of the co-extruded two-layer polymer films and the measured melt tensions is similar to the relationship found in Example 1. As shown in Table 3, the difference between the measured melt tension 502 versus the calculated weighted average melt tension 504 is less than 11% of the calculated weighted average melt tension 504, which indicates that the accuracy of the melt tension system may be acceptable for characterizing web stability.

The measured melt tension 602 for each of the monolayer polymer films, which have a blend of LDPE and LLDPE, of Example 3 are shown in FIG. 6. Also included in FIG. 6 are weighted average melt tensions 604 calculated for each composition of the monolayer polymer film. The calculated weighted average melt tension 604 exhibits a linear relationship between melt tension and composition and provides an estimate of the melt tensions of the blends that would be expected in the absence of a synergistic effect. The weighted average melt tensions were calculated as the sum of the weight percent multiplied by the measured melt tension for each individual polymer in the blend. Table 2, subsequently included, provides the measured melt tension 602 and calculated weighted average melt tension 604 for each of the compositions, as well as a calculated difference between the weighted average melt tension 604 and the measured melt tension value 602.

**Table 4: Measured Melt Strength vs. Composition for a Monolayer Polymer Film Comprising Various Blends of LDPE and LLDPE of Example 3**

| LDPE/LLDPE Monolayer Blend Composition | | Measured Melt Tension | Calculated Weighted Average Melt Tension | Difference Between Measured and Weighted Average |
|---|---|---|---|---|
| LDPE (wt. %) | LLDPE (wt. %) | Force (g*_{F}*) | Force (g*_{F}*) | % |
| 100 | 0 | 856 | 856 | 0.00 |
| 80 | 20 | 1055 | 752 | 40.29 |
| 60 | 40 | 980 | 648 | 51.23 |
| 40 | 60 | 810 | 544 | 48.90 |
| 20 | 80 | 560 | 440 | 27.27 |
| 0 | 100 | 336 | 336 | 0.00 |

The melt tension results for the blended monolayer polymer films of Example 3 reproduce the trend indicating the synergistic effect of blending LLDPE with a LDPE polymer that that was demonstrated in Example 2. As indicated in Table 4, the measured melt tension of 336 g*_{F}* for the monolayer polymer film having 100 wt. % LLDPE was less than half of the measured melt tension of 856 g*_{F}* for the monolayer polymer film having 100 wt. % LDPE and 0 wt. % LLDPE. If one assumes a linear relationship between composition and melt tension as estimated by the weighted average melt tension 604, one would expect the monolayer polymer film having 80 wt. % LDPE and 20 wt. % LLDPE to have a measured melt tension of 752 g*_{F}*, which is less than the 856 g*_{F}* melt tension measured for the 100 wt. % LDPE polymer film. However, as illustrated in FIG. 6 and shown in Table 4, the measured melt tension of 1055 g*_{F}* for the 80:20 LDPE to LLDPE monolayer polymer film was substantially greater than the weight average melt tension calculated for the 80:20 LDPE to LLDPE monolayer polymer film.

The melt tensions measured by the melt tension system for each of the monolayer polymer blends in Example 3 indicate the presence of a synergistic effect occurring between the LDPE and the LLDPE in the polymer blends. As such, the melt tension systems and methods have reproduced the trend demonstrating the synergistic effects of the polymer blends of LDPE and LLDPE that was obtained in Example 2.

Throughout this disclosure ranges are provided for various parameters and characteristics of the melt tension system 100. It will be appreciated that when one or more explicit ranges are provided the individual values and the ranges formed therebetween are also intended to be provided as providing an explicit listing of all possible combinations is prohibitive. For example, a provided range of 1-10 also includes the individual values, such as 1, 2, 3, 4.2, and 6.8, as well as all the ranges which may be formed within the provided bounds, such as 1-8, 2-4, 6-9, and 1.3-5.6.

It should now be understood that various aspects of the melt tension systems and methods of determining a melt tension of a monolayer or multilayer polymer film are described and such aspects may be utilized in conjunction with various other aspects. It should also be understood to those skilled in the art that various modifications and variations can be made to the described embodiments without departing from the spirit and scope of the claimed subject matter. Thus, it is intended that the specification cover the modifications and variations of the various described embodiments provided such modification and variations come within the scope of the appended claims and their equivalents.

## Claims

1. A method for determining a melt strength of a polymer film, the method comprising:
extruding one or more polymers to form the polymer film;
passing the polymer film at least partially around a measurement roll coupled to a force measuring device, at least partially around a chill roll downstream of the measurement roll, and through a nip defined between two nip rolls downstream of the chill roll, wherein the polymer film is a partially or fully molten polymer film when at least partially contacting the measurement roll; and
measuring a force exerted on the measurement roll by the polymer film using the force measuring device.

2. The method of any of claims 1 and 15, wherein the polymer film is a multiple-layer polymer film.

3. The method of any of claims 1-2 and 15, wherein the polymer film comprises low density polyethylene.

4. The method of any of claims 1-3 and 15, further comprising winding the polymer film on a winder positioned downstream of the nip rolls.

5. The method of any of claims 1-4 and 15, further comprising cooling the polymer film with the chill roll.

6. The method of any of claims 1-5 and 15, further comprising maintaining the chill roll at a temperature less than a melt temperature of the polymer film.

7. The method of any of claims 1-6 and 15, further comprising applying a tension to the polymer film using a tensioner positioned downstream from the chill roll.

8. The method of any of claims 1-7, further comprising recording the melt strength measured by the force measuring device.

9. The method of any of claims 1-8, further comprising extruding the polymer film and passing the polymer film around the measuring roll, around the chill roll, and through the nip until the polymer film attains a steady state, wherein the force exerted on the measurement roll is measured by the force measuring device while the polymer film is in said steady state.

10. The method of any of claims 1-9, further comprising continuously extruding the polymer film.

11. A system for determining a melt strength of a polymer film comprising:
an extruder having an extrusion die adapted to extrude one or more polymers to form a molten polymer film;
a measurement roll positioned downstream of the extruder, the measurement roll having one or more load cells coupled thereto, wherein the one or more load cells measure a force exerted by the molten polymer film on the measurement roll;
a chill roll positioned downstream of the measurement roll, the chill roll operatively coupled to a drive mechanism, wherein the chill roll cools the molten polymer film to produce a polymer film;
at least two nip rolls positioned downstream of the chill roll; and
a take-up roll positioned downstream of the at least two nip rolls;
wherein the system defines a pathway in which the polymer film travels, the pathway bringing the polymer film into contact with the measurement roll, the chill roll, the at least two nip rolls, and the take-up roll.

12. The system of claim 10, wherein the extrusion die is a slot die adapted to co-extrude a multi-layer polymer film.

13. The system of any of claims 10-11, wherein the measurement roll has a modified surface to reduce adhesion of the measurement roll to the molten polymer film.

14. The system of any of claims 10-12, further comprising a tensioner positioned downstream of the at least two nip rolls.

15. The system of any of claims 10-13, wherein the pathway is vertical from a lip of the extrusion die to a point at which the molten polymer film first contacts the measurement roll.

16. A method for determining a melt strength of a polymer film, the method comprising:
providing the system of any of claims 10-14;
extruding the molten polymer film;
passing the molten polymer film having a single layer or multiple layers through the pathway from the extruder to the take-up roll; and
measuring a force exerted on the one or more load cells caused by contact of the molten polymer film with the measurement roll.
